# EUROPEAN PATENT APPLICATION

(11) **EP 3 361 132 A1**
(43) Date of publication of application: **15.08.2018**
(21) Application number: 18156360.2
(22) Date of filing: 12.02.2018
(51) Int. Cl.: F16L 5/00, E03F 5/04, E03C 1/12, E04B 5/48, F16L 5/02

(54) **PENETRATION PIECE TO BRING HOUSE DRAINAGE PIPE THROUGH THE FLOOR VAULT**

(30) Priority: 10.02.2017 FI 20175116
(71) Applicant: Uponor Infra Oy, 01510 Vantaa (FI)
(72) Inventor: NILSSON, Bo, deceased (FI)
(74) Representative: Seppo Laine Oy

(57) **Abstract**

Penetration piece and method for installation of drainages through vaults. The penetration piece has a pipe with a first end capable of coupling to a drainage pipe of a plumbing fixture or appliances located on a first side of the vault, and a second, opposite end capable of coupling to draining piping located on a second, opposite side of the vault. The second end of the pipe is provided with a planar flange. The penetration piece can be attached to the vault for positioning the pipe inside the opening while forming a spacing between the outer surface of the pipe and the facing inner surfaces of the opening. The central portion of the flange forms a casting support surface to allow for casting of a hardening material in the space defined by the outer surface of the pipe, the inner surfaces of the opening and the casting support surface. Using the penetration piece, time consumption of installation work is reduced, and the pipe passing through the vault is firmly kept in place during casting.

## Description

### Field

The present invention relates to installation of drainage systems for example in dwelling quarters, for example in high rise buildings. In particular, the present invention concerns a penetration piece for installation of drainages. The present invention also concerns a method of installing drainage systems.

### Background

In high rise buildings, bathroom drainage pipes are often dropped from one flat through the concrete vault or floor to a lower flat. In the lower flat there is typically a lowered ceiling structure which covers the piping. This is a common construction in renovation, but it is also used, to some extent, in new buildings.

The passage of the drainage pipe through the concrete vault is typically achieved by manually first forming an opening in the vault for example by drilling. Then, pipes are installed in the opening in the vault while a casting support plate is mounted beneath the opening. The lower end of the pipes abuts with the casting support. Oftentimes, the casting support plate is temporarily supported against the floor below it. The space between the pipes and the inner walls of the opening are then filled with a hardening material, such as concrete, by casting. After the cast has dried and the material has achieved a reasonable degree of stiffness, such that the pipes are immobilized and fixed in the cast material, the support plates are removed to reveal the lower end of the pipe. The lower end of the pipe is then connected to the draining piping.

The current method is impaired by considerable disadvantages. Thus, for example, it is time-consuming because the vertical pipes cannot be connected to the below draining ducts (piping) by the plumber cannot be carried out until the cast has stiffen to the extent that the support plate can be removed. During the drying and hardening of the cast, there is also a risk that the pipe moves or tilts.

### Summary of the Invention

It is an aim of the present invention to eliminate at least a part of the problems of the known technology and to provide a novel method of achieving vault penetration for installation of drainages.

It is another object of the invention to provide a novel penetration piece which facilitates installations of drainage through vaults.

The present invention is based on the idea of providing a vault penetration piece, which comprises a tube which has two opposite ends, the first one being capable of connecting to plumbing fixture or appliances and the second one being capable to coupling to draining piping. The second end, which is the lower end when the vault penetration piece is vertically in place in an opening formed in a vault, further exhibits a planar flange.

The second end of the pipe is further provided with a planar flange which has two opposite sides, the first side having a surface facing in the same direction as the first end of the pipe, and the second side having a surface facing towards the draining piping.

The flange can be mounted to the vault, on the side facing the draining piping. To that end, the flange exhibits a peripheral zone having a width in at least one direction greater than the largest inner dimension of the opening and capable of contacting with the second side of said vault.

The planar flange has further a second, central portion located between the peripheral zone and the pipe. The central portion forms a casting support surface once the penetration piece is attached to the vault.

Thus, by fixing the peripheral zone to the vault, the penetration device can be attached to the opening in such a way that the pipe is positioned inside the opening while there is formed a spacing between the outer surface of the pipe and the facing inner surfaces of the opening. Thereby, the inside, i.e. central portion, of the flange forms a casting support surface during the casting of the hardening material. Hardening material can be cast in the space defined by the outer surface of the pipe and the inner surfaces of the opening in order to fix the pipe inside the opening,

More specifically, the present invention is mainly characterized by what is stated in the characterizing part of the independent claims.

Considerable advantages are obtained by the invention. Thus, installation of drainage through the vault is facilitated and there is a considerable saving in time expenditure and work. There is no need for removable casting support plates. By using a prefabricated penetration piece, depending on the thickness of the vault and the dimensions of the draining pipes there is a time saving of at least 10 to 15 minutes for each penetration. This is a significant advantage in particular in installation work in high rise buildings where there can be hundreds of penetrations.

The manufacture of the vault piece is straightforward and can be achieved using thermoplastic polymers.

Further, the pipe passing through the vault is prevented from moving and tilting during casting. The vault penetration pieces can be provided with integrated fire protection.

### Brief Description of the Drawings

Figure 1 shows in a perspective view an embodiment of the present penetration piece, obliquely from above;
Figure 2 shows in a perspective view an embodiment of a penetration piece when installed and mounted to the lower surface of a concrete vault;
Figure 3 shows in side-view the three main steps for installing drainage through a vault, using a penetration piece according to one embodiment of the present invention; and
Figure 4 shows in side-vied the cross-section of an alternative embodiment of a penetration piece installed in an opening through a vault.

### Embodiments

As briefly discussed above, the present penetration pieces are used for installation of drainage through an opening in a vault. The opening has an inner diameter which typically is about 50 to 500 mm.

In the present context, the "inner diameter" or "inner dimension", respectively, of the opening is determined perpendicularly to the central axis of the opening, i.e. typically in parallel to the planar surface of the vault. In the following, the term "cross-sectional" will also be used for designating that the inner diameter or inner dimension are determined perpendicularly to the central axis of the opening. The opening is greater than 50 mm, in particular greater that 80 mm and typically up to about 500 mm.

The opening extends through the whole thickness of the vault and it is generally preferred to have the opening formed such that its central axis is perpendicular to the planar surface of the vault. Conventionally, the "vault" is horizontally orientated in a building (i.e. the opening is formed in a "floor"), but it is naturally possible to utilize the present technology also for forming passageways in vertical structures (such as walls). Generally, a "vault" is a rigid, frequently elongated construction, for example of concrete, which typically is self-supporting and conventionally spans between two supporting points.

The thickness of the vault is generally from about 50 mm to 750 mm, in particular from about 75 to 500 mm. A typical thickness would lie in the range of about 100 to 400 mm.

Although the present technology is in particular useful for concrete vaults, passageways can naturally be achieved also in vaults, floors and blocks made of other materials, such as plastics and composite materials as well as wooden structures, for example multiply boards. The vault or floor can naturally comprise a combination of many materials, and it can have a surface layer. Examples of such surface layers include various polymeric material layers, tiles, cork and wooden and composite boards.

Depending on the material of the vault, the opening can be formed in various ways. Conventionally, the opening is drilled before the pipe is installed, but in case of concrete vaults, the opening can be formed during casting of the vault.

For the sake of order it should be noted that although the opening usually has a circular cross-section, it is also possible to form openings having cross-sections which are non-circular, such as elliptical or rectangular. For such openings, the "inner diameter" referred to above is replaced with the "smallest inner dimension".

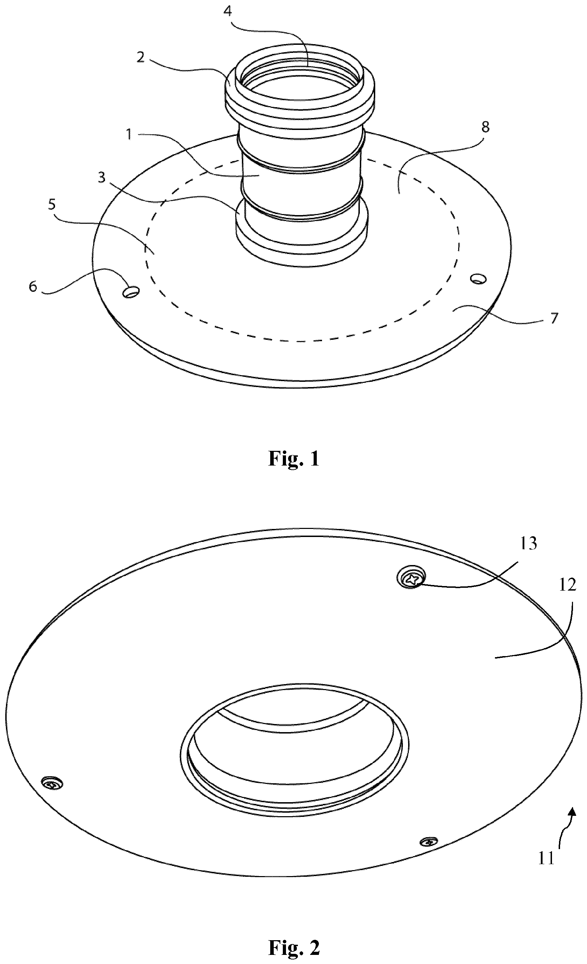

Figure 1 shows schematically the penetration piece according to one embodiment that can be used for forming a passageway through a vault, and Figure 2 shows a penetration piece according to a similar (although not identical) embodiment fixed to the vault.

As can be seen from the drawing, in the embodiment shown in Figure 1, the penetration piece comprises a pipe 1, which is provided with pipe sockets 2, 3, one at each end, as well as with a plate sleeve which in the following will be referred to as a "flange" 5.

The dimensions of the pipe 1 used for the passageway through the vault are selected depending on the capacity needed for the drainage and the thickness of the vault. Typically, the pipe has an outer diameter of about 40 to 250 mm and a length which preferably corresponds to at least half the thickness of the vault. For example the length is 0.5 to 1, such as 0.6 to 0.9 times the thickness of the vault. The outer diameter of the pipe is smaller than the inner, cross-sectional diameter (or smallest inner, cross-sectional dimension) of the opening formed in the vault; typically, the pipe has an outer diameter which is 0.1 to 0.95 times the diameter or smallest inner dimension of the opening. Typical diameters of the pipe are 50 mm, 75 mm and 110 mm.

In particular, the pipe has an outer diameter which is 0.1 to 0.9 times, in particular 0.3 to 0.8 times, for example 0.3 to 0.6 times the diameter of the opening.

The penetration piece typically has a first end 2 capable of coupling to a drainage pipe or plumbing fixtures or appliances located on one side of the vault, and a second, opposite end 3 capable of coupling to draining piping located on a second, opposite side of the vault. As shown in Figure 1, the ends can be provided with sleeves to assist with the coupling of the first end to plumbing fixtures or appliances, and draining piping, respectively. The plumbing fixtures and appliances include, for example, toilet seats, wash basins, bath tubs and shower cubicles. It is however possible to provide the penetration piece in the form of a pipe having a socket only at one end of penetration piece.
The second end 3 is equipped with a flange 5 which surrounds the pipe.

In one embodiment, the flange 5 is mounted close to the end or even such that it is flush mounted with the end, as shown in the drawing. It is, however, possible to arrange the flange at a distance from the end. In one preferred embodiment, the distance from the flange to the first end is roughly equal to the thickness of the vault.

In one embodiment, the flange 5 comprises a planar structure, such as a plate surrounding the pipe. Conventionally, the plate is circular, but it can also be rectangular or quadratic. It can also be elliptical or irregularly shaped.

In a preferred embodiment, the plane of the flange is perpendicular in respect to the central axis of the pipe.

The flange has at least two opposite planar sides. The first side has a surface 7, 8 which faces at least essentially in the same direction as the first end of the pipe, and the second side has a surface 12 (cf. Figure 2) which at least essentially faces towards the draining piping. The planar surface 12 is, when the penetration piece is installed in place, parallel with the second surface of the vault. Typically, there flange surface 12 does not extend downwards. Thus, in one embodiment, the second side of the flange consists of a planar surface. However, the second end may extend slightly below surface 12 to accommodate for a socket with a sealing.

The surface of the planar flange facing in the same direction as the first end of the pipe is capable of contacting, i.e. abutting, with the second surface of the vault. To that end, the flange is extended in planar direction such that adjacent to its rim there is a peripheral zone 7, which extends in all directions a length which is greater than the largest inner dimension of the opening. Such length is calculated from one point of the rim to the corresponding point on the rim on the opposite side of the pipe. In the case of an opening having a circular cross-section and a flange having a circular shape, the flange has a diameter which is greater than the inner diameter of the opening.

The peripheral zone 7 of the penetration piece can be placed against the vault on the side 11 opposite to the one adjacent to the plumbing fixtures and appliances, and fixed to the vault, for example, using fastening means, such as hammer rivets or hammer screws 13, extending through apertures 6 formed in the flange. Since the peripheral 7 zone is ring shaped (or annular) with a diameter greater than the diameter of the opening, the penetration piece can be place at the opening so that the pipe is fitted inside the opening while there is formed a spacing between the outer surface of the pipe and the facing inner surfaces of the opening.

The number of said apertures can vary freely, however preferably it is greater than 2, for example 3 to 10 which ensures proper fixing of the flange against the concrete vault surface while maintaining proper stiffness and rigidity of the peripheral zone.

Between the peripheral zone and the pipe, there is a second, central portion 8 on the penetration piece which portion forms a casting support surface once the penetration piece is attached to the vault to allow for casting of a hardening material in the space defined by the outer surface of the pipe, the inner surfaces of the opening and the casting support surface.

In a preferred embodiment, the planar flange has an outer perimeter defining a circle having a center located on the central axis of the pipe. This will help with the centering the pipe inside the opening.

Typically, planar flange has a circular outer perimeter, with a diameter which is at least 1.05 times greater than the inner diameter of the opening, in particular the diameter of the outer perimeter of the flange is 1.1 to 2.5 times the inner diameter of the opening. When the flange is sufficiently large, reliable mounting to the vault can be ensured.

In preferred embodiment, the pipe has a circular cross-section and the central portion comprises an annular area surrounding the pipe, the annular area having a largest diameter of at least 1.1 times, preferably 1.2 to 3.5 times the diameter of the pipe. The area of the central portion is selected such that it covers at least the whole area of the opening. Therefore, the central portion typically has a smallest dimension equal to the inner diameter of the opening.

In one embodiment, the central portion is completely enclosed by the peripheral zone. In case of both the peripheral zone and the central portion being annularly shaped, the central area has a largest diameter of 0.5 to 0.9 times, for example 0.5 to 0.75 times the diameter of the outer perimeter of the flange.

In one embodiment, the pipe 1 and the planar flange 5 consist of a thermoplastic material, in particular selected from the group of polyolefines, such as polypropylene, polyesters, polyamides, polyimides and polyvinylchloride.

The flange 5 is preferably rigidly fixed to the pipe. It can be welded to the pipe, for example by friction welding. This is preferred for polyolefins, such as polypropylene.

The flange can also be glued to the pipe in the case of polyvinylchloride

In one embodiment, the penetration piece is at least partially, in particular totally manufactured as a single piece, in a preferred embodiment, the pipe, the at least one sleeve and the flange form an integral unit. The manufacture of the single piece can be carried out by molding, for example by injection molding or blow molding. Alternatively it can also be manufactured by 3D-printing, or a combination of the afore-going methods. In one embodiment, sealing rings of the at least one sleeve are added in a separate step.

In one embodiment, the thickness of the flange is sufficient to achieve a plate which is rigid enough for abutting tightly against the vault surface during casting. For any of the above mentioned thermoplastics, the thickness is typically 2.5 to 10 mm, for polyolefins, such as polypropylene, the thickness is for example about 3.5 to 10 mm.

As will appear from the embodiments shown in Figures 1 and 2 both ends of the penetration piece are preferably provided with sockets 2 and 14. Both sockets have inner sealing rings 4, 15 for allowing leak-proof coupling to the draining piping.

Whereas the second end is coupled with draining piping, the first end has a socket 2 with an inner sealing 4 for coupling to the drainage pipe of a plumbing fixture or appliance.

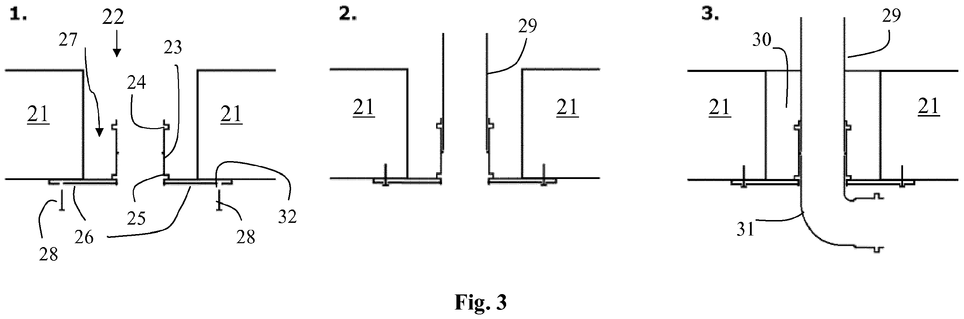

The method of providing vault penetration for achieving drainage of plumbing fixtures or appliances is shown in Figure 3.

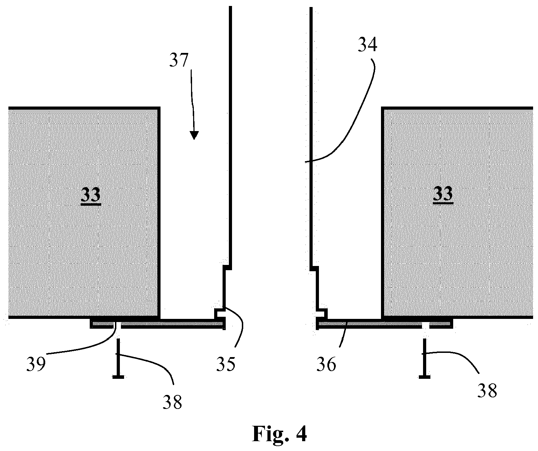

As will be apparent from Figures 3 and 4, the first end of the penetration piece forms the "upper" end of it when the penetration piece is arranged so that the central axis of the pipe is vertical. The second end of the penetration piece then forms the low end of the penetration piece.

With reference to Figure 3 which shows the insertion of an embodiment of the present invention into an opening formed in a horizontally orientated planar vault, the method comprises the steps of
- forming in the vault 21 an opening 22 with an inner diameter greater than 80 mm;
- providing a pipe 23 having an outer diameter which is 0.1 to 0.95 times the diameter of the opening, said pipe having a lower socket 25 for coupling of pipes and an upper socket 24 - which is optional, as will be explained below, as well as a flange 26;
- fitting said pipe 23 inside the opening 22 while forming a spacing 27 between the outer surface of the pipe and the facing inner surfaces of the opening;
- fixing the flange with rivets 28 or other fixing means to the lower surface of the vault 21, and optionally coupling a first pipe 29 to the upper socket 24; and;
- casting of a hardening material 30 in the space 27 defined by the outer surface of the pipe, the inner surfaces of the opening and the casting surface provided by the planar flange in order to fix the pipe inside the opening, and coupling drainage piping 31 to the lower socket 25.

As evident from the above, the pipe 23 is firmly kept in place during casting. Typically, the hardening material is a hydraulically hardening mineral material, although the material can also be a thermosetting polymer optionally mixed with fillers or even a foaming polymer, such as polyurethane.

Assembly of the penetration piece into a horizontally orientated vault or plate is carried out using similar steps, although the central axis of the pipe will be at least essentially horizontally orientated.

A further embodiment of the penetration piece is shown in Figure 4. Thus, the penetration piece according to the alternative embodiment comprises a pipe 34 fitted with a lower socket 35. The pipe has a length which is greater than the thickness of the vault 33, such that the upper end of the pipe extends to a height above the upper surface of the vault. Just as in the earlier described embodiments, the penetration piece has a flange 36 with apertures 39, through which the flange 36 can be fixed to the lower surface of the vault 33 by rivets 38 or other fixing means.

The spacing 37 formed between the outer surface of the pipe 34 and the facing surfaces of the opening can be filled with a hardening material. Typically, the hardening material will fill the opening up to the level of the upper surface of the vault, leaving the pipe 34 extending into the space above the vault. Typically, the end of the pipe is located at least 10 mm, in particular 25 to 500 mm above the upper surface of the vault.

Based on the above, the present technology comprises for example following embodiments:
1. Penetration piece for installation of drainage through an opening in a vault (11; 21; 33) having a thickness, said opening having a smallest dimension greater than 50 mm and said penetration piece comprising
   - a pipe (1; 23; 29; 34) which fits into the opening (22) and which has a diameter smaller than the smallest dimension of the opening (22), said pipe (1; 23;34) further having
      - a first end capable of coupling to a drainage pipe, plumbing fixtures or appliances located on a first side of said vault (11; 21; 33), and
      - a second, opposite end capable of coupling to draining piping located on a second, opposite side of said vault (11; 21; 33),
   wherein
   - said second end of the pipe is provided with a planar flange (5; 26; 36) which has two opposite sides, the first side having a surface facing in the same direction as the first end of the pipe, and the second side having a planar surface (12) facing towards the draining piping (31),
   - the surface of the first side having
   - a first, peripheral zone (7) with a width greater than the largest inner dimension of the opening (22) and capable of contacting with the second side of said vault (11; 21; 33) on opposite sides of the opening to allow for attachment of the penetration piece to the opening of the vault (11; 21; 33) so as to position the pipe inside the opening while forming a spacing (27; 37) between the outer surface of the pipe and the facing inner surfaces of the opening, and
   - a second, central portion located between the peripheral zone (7) and the pipe (1; 23; 29; 34) and forming a casting support surface once the penetration piece is attached to the vault to allow for casting of a hardening material in the space defined by the outer surface of the pipe (1; 23; 29; 34), the inner surfaces of the opening (22) and the casting support surface.
2. The penetration piece according to embodiment 1, wherein the planar flange (5; 26; 36) has an outer perimeter defining a circle having a center which is located on the central axis of the pipe (1; 23; 29; 34).
3. The penetration piece according to embodiment 1 or 2, wherein the planar flange (5; 26; 36) has a circular outer perimeter, with a diameter which is at least 1.05 times greater than the inner diameter of the opening (22), in particular the diameter of the outer perimeter of the flange is 1.1 to 2.5 times the inner diameter of the opening (22).
4. The penetration piece according to any of the preceding embodiments, wherein the peripheral zone (7) is provided with means for attaching the flange (5; 26; 36) to the vault (11; 21; 33).
5. The penetration piece according to any of the preceding embodiments, wherein the pipe (1; 23; 29; 34) has a circular cross-section and an outer diameter which is 0.1 to 0.9 times, in particular 0.3 to 0.8 times, for example 0.3 to 0.6 the smallest inner dimension, in particular the diameter, of the opening (22).
6. The penetration piece according to any of the preceding embodiments, wherein the pipe (1; 23; 29; 34) has a circular cross-section and the central portion comprises an annular area surrounding the pipe (1; 23; 29; 34), the annular area having a largest diameter of at least 1.1 times, preferably 1.2 to 3.5 times the diameter of the pipe (1; 23; 29; 34).
7. The penetration piece according to embodiment 6, wherein the largest diameter of the central portion is 0.5 to 0.9 times the diameter of the outer perimeter of the flange (5; 26; 36).
8. The penetration piece according to any of the preceding embodiments, wherein the central portion has a smallest dimension equal to the inner diameter of the opening (22).
9. The penetration piece according to any of the preceding embodiments, wherein the flange (5; 26; 36) is rigidly fixed to the second end of the pipe.
10. The penetration piece according to any of the preceding embodiments, wherein the pipe (1; 23; 29; 34) and the planar flange (5; 26; 36) consist of a thermoplastic material, in particular selected from the group of polyolefines, such as polypropylene, polyesters, polyamides, polyimides and polyvinylchloride.
11. The penetration piece according to embodiments 9 or 10, wherein the flange (5; 26; 36) is welded to the penetration piece or attached by gluing.
12. The penetration piece according to any of the preceding embodiments, wherein the flange (5; 26; 36) consists of polyolefin, in particular polypropylene, and has a thickness of 2.5 to 10 mm.
13. The penetration piece according to any of the preceding embodiments, wherein the second end has a socket (3; 25; 35) with an inner sealing for coupling to the draining piping (31).
14. The penetration piece according to any of the preceding embodiments, wherein the first end has a socket (2; 24) with an inner sealing for coupling to the drainage pipe of a plumbing fixture or appliance.
15. The penetration piece according to any of embodiments 1 to 13, wherein the first end consists of a pipe end having the same diameter as the adjacent part of the pipe (1; 23; 29; 34).
16. The penetration piece according to any of the preceding embodiments, wherein the flange (5; 26; 36) is friction welded to the penetration piece, in particular to the socket (3; 25; 35) of the second end of the pipe.
17. The penetration piece according to any of the preceding embodiments, wherein the pipe (1; 23; 29; 34) has a diameter in the range of 40 to 250 mm and the planar flange (5; 26; 36) has a diameter in the range of 100 to 500 mm.
18. The penetration piece according to any of the preceding embodiments, wherein apertures (6; 32; 39) are formed in the peripheral zone (7), the number of said apertures (6; 32; 39) preferably being 3 to 10.
19. The penetration piece according to any of the preceding embodiments, wherein the pipe (1; 23; 29; 34) has a circular cross-section and a length which is equal to at least half the thickness of the vault (11; 21; 33), for example the length is 0.5 to 1, such as 0.6 to 0.9 times the thickness of the vault.
20. The penetration piece according to any of the preceding embodiments, the penetration piece being manufacture as a single piece, for example by injection molding, blow molding or 3D-printing.

### Industrial Applicability

The present invention is particularly useful for forming passageways and penetrations in vaults (including floors and walls) during construction and renovation of drainages in buildings. The present invention can be used for example for renovation of wet rooms, such as toilets, bathrooms and washing rooms, and kitchens and other rooms where there is a drain for water connected to fittings and appliances used in the room. Naturally, the present invention can also be applied to installation of other ducts through various walls, ceilings or floors in warm and in cold spaces, as well as for providing passageways in outdoor constructions.

### Reference Signs

- 1, 23, 34: pipe
- 2, 24: first end socket
- 3, 25, 35: second end socket
- 4: sealing
- 5, 26, 36: flange
- 6, 32, 39: aperture
- 7: peripheral zone
- 8: central area
- 11, 21, 33: vault
- 12: lower surface of flange
- 13, 28, 38: fixing means (rivets, for example)
- 22: opening
- 27, 37: spacing
- 29: pipe
- 30: hardening material
- 31: draining piping

## Claims

1. Penetration piece for installation of drainage through an opening in a vault (11; 21; 33) having a thickness, said opening having a smallest dimension greater than 50 mm and said penetration piece comprising
- a pipe (1; 23; 29; 34) which fits into the opening (22) and which has a diameter smaller than the smallest dimension of the opening (22), said pipe (1; 23;34) further having
- a first end capable of coupling to a drainage pipe, plumbing fixtures or appliances located on a first side of said vault (11; 21; 33), and
- a second, opposite end capable of coupling to draining piping located on a second, opposite side of said vault (11; 21; 33),
**characterized in that**
- said second end of the pipe is provided with a planar flange (5; 26; 36) which has two opposite sides, the first side having a planar surface facing in the same direction as the first end of the pipe, and the second side consisting of a planar surface (12) facing towards the draining piping (31),
- the surface of the first side having
- a first, peripheral zone (7) with a width greater than the largest inner dimension of the opening (22) and capable of contacting with the second side of said vault (11; 21; 33) on opposite sides of the opening to allow for attachment of the penetration piece to the opening of the vault (11; 21; 33) so as to position the pipe inside the opening while forming a spacing (27; 37) between the outer surface of the pipe and the facing inner surfaces of the opening, and
- a second, central portion located between the peripheral zone (7) and the pipe (1; 23; 29; 34) and forming a casting support surface once the penetration piece is attached to the vault to allow for casting of a hardening material in the space defined by the outer surface of the pipe (1; 23; 29; 34), the inner surfaces of the opening (22) and the casting support surface.

2. The penetration piece according to any of the preceding claims, wherein the pipe (1; 23; 29; 34) has a circular cross-section and an outer diameter which is 0.1 to 0.9 times, in particular 0.3 to 0.8 times, for example 0.3 to 0.6 the smallest inner dimension, in particular the diameter, of the opening (22).

3. The penetration piece according to any of the preceding claims, wherein the pipe (1; 23; 29; 34) has a circular cross-section and the central portion comprises an annular area surrounding the pipe (1; 23; 29; 34), the annular area having a largest diameter of at least 1.1 times, preferably 1.2 to 3.5 times the diameter of the pipe (1; 23; 29; 34).

4. The penetration piece according to any of the preceding claims, wherein the second end has a socket (3; 25; 35) with an inner sealing for coupling to the draining piping (31).

5. The penetration piece according to any of the preceding claims, wherein the first end has a socket (2; 24) with an inner sealing for coupling to the drainage pipe of a plumbing fixture or appliance.

6. The penetration piece according to any of the preceding claims, wherein the pipe (1; 23; 29; 34) has a circular cross-section and a length which is equal to at least half the thickness of the vault (11; 21; 33), for example the length is 0.5 to 1, such as 0.6 to 0.9 times the thickness of the vault.

7. A method of providing vault penetration for achieving drainage of plumbing fixtures or appliances, comprising the steps of
- forming in the vault an opening with a smallest inner dimension greater than 80 mm,
- providing a pipe having a largest dimension which is 0.1 to 0.95 times the smallest inner dimension of the opening, said pipe further having
- a first end capable of coupling to a drainage pipe, plumbing fixtures or appliances located on a first side of said vault, and
- a second, opposite end capable of coupling to draining piping located on a second, opposite side of said vault,
- fitting said pipe inside the opening while forming a spacing between the outer surface of the pipe and the facing inner surfaces of the opening, and
- casting of a hardening material in the space defined by the outer surface of the pipe and the inner surfaces of the opening in order to fix the pipe inside the opening,
**characterized in that**
- the second end of the pipe is provided with a planar flange which has a width which is greater than the largest inner dimension of the opening,
- fixing the planar flange against the second side of the vault to allow for attachment of the penetration piece to the opening of the vault so as to position the pipe inside the opening while forming a spacing between the outer surface of the pipe and the facing inner surfaces of the opening, whereby
the inside of the flange forms a casting support surface during the casting of the hardening material.

8. The method according to claim 7, comprising using a pipe and a flange forming together a penetration piece according to any of claims 1 to 6.

9. The method according to claim 7 or 8, wherein the planar flange is fastened to the second side of the vault with hammer rivets or hammer screws.

10. The method according to any of claims 7 to 9, comprising casting a hardening material selected from the group of hydraulically hardening mineral material.

11. The method according to any of claims 7 to 10, comprising installing drainage for indoor plumbing fixtures and appliances through a vault.

12. The method according to any of claims 7 to 11, comprising connecting the second end of the pipe to draining piping before hardening of the casting material, optionally before casting of a hardening material.

13. The method according to any of claims 7 to 12, wherein the second end of the pipe is provided with a socket to facilitate coupling of the second end to draining piping.

14. The method according to any of claims 7 to 13, wherein the first end of the pipe is provided with a socket to facilitate coupling of the first end to a drainage pipe of a plumbing fixture or appliances located on a first side of said vault.

15. The method according to any of claims 7 to 14, wherein the first end is flush with the adjacent parts of the pipe.
